# EUROPÄISCHE PATENTSCHRIFT

(11) **EP 2 604 896 B1**
(45) Veröffentlichungstag und Bekanntmachung des Hinweises auf die Patenterteilung: **12.08.2015**
(21) Anmeldenummer: 11193649.8
(22) Anmeldetag: 15.12.2011
(51) Int. Cl.: F16K 11/074, F16K 31/04, F16K 37/00, G05D 23/13

(54) **Mischvorrichtung für Leitungswasser**
Mixing device for tap water
Dispositif de mélange pour eau du robinet

(43) Veröffentlichungstag der Anmeldung: 19.06.2013
(73) Patentinhaber: Flühs Drehtechnik GmbH, 58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- DE-A1- 19 637 610
- DE-A1-102008 022 852
- DE-U1-202009 000 525
- DE-U1-202010 000 871
- US-A- 6 079 625
- US-A1- 2001 020 645

## Beschreibung

Die Erfindung betrifft eine Mischvorrichtung für Leitungswasser nach dem Oberbegriff des Patentanspruchs 1.

Bei der Zuführung von Wasser, insbesondere in Küche und Bad, besteht regelmäßig die Anforderung, eine definierte Wassertemperatur sowie einen definierten Wasserdruck einstellen zu können. Zur Einstellung der Temperatur ist es bekannt, Thermostatmischer einzusetzen, welche über ein thermisches Element das Mischungsverhältnis eines Kaltwasserstroms sowie eines Warmwasserstroms regelt. Das Thermoelement ist dabei derart angeordnet, dass bedingt durch die thermische Ausdehnung des Elements die Wasserströme beeinflusst werden. Die relative Position des Thermoelements kann über einen Einstellknopf variiert werden, wodurch die gewünschte Wassertemperatur einstellbar ist. Die Einstellung des Wasserdrucks erfolgt über ein nachgeschaltetes Mengenventil, mit dem der Zufluss des Mischwasserstroms des Thermostatventils einstellbar ist. Die Einstellung erfolgt regelmäßig über Dreh- oder Kippeinrichtungen. Durch mechanische Einwirkungen, wie durch den Wasserdurchfluss indizierte Vibrationen oder durch den Verstellhebel anliegende Gewichtskräfte ist jedoch oftmals eine eigendynamische Verstellung bewirkt, welche eine Änderung der tatsächlich anliegenden Temperatur bzw. des tatsächliche anliegenden Wasserdrucks zu Folge hat und die ein Nachstellen der Parameter in unregelmäßigen Zeitabständen erforderlich machen kann.

Vor diesem Hintergrund besteht zunehmend die Anforderung, die Temperatur und den Volumenstrom des Wassers komfortabel und zuverlässig einstellen zu können. Aus der DE 20 2009 000 525 U1 ist eine elektronisch regelbare Mischvorrichtung für Leitungswasser bekannt, welche eine komfortable Regelung von Wasserdruck und -temperatur ermöglicht. Dabei sind ein Mischventil und Mengenventil über eine Leitung miteinander verbunden hintereinander geschaltet angeordnet. Das Mengenventil weist ein seitlich gegenüberliegend zwei Fenster aufweisendes Kopfstück auf, das von einer in diesem radial geführten Spindel mittig durchsetzt ist, die mit einer Steuerscheibe im Eingriff steht. Zur Ermittlung der Temperatur des über das Mischventil zugeleiteten Wassermengenstroms ist ein Temperatursensor angeordnet, der mit der Steuer- und Regelvorrichtung verbunden ist, über welche die Temperatur des Wassermengenstroms einstellbar ist.

Die vorbekannte Mischvorrichtung gewährleistet in weiten Teilen eine vorgegebene Durchflussmenge und Temperatur des Wassermengenstroms auf Basis der jeweils vorliegenden Messwerte. Es hat sich jedoch gezeigt, dass insbesondere zu Beginn des Wasserdurchlaufs sich erhebliche Temperaturschwankungen ergeben können. Im weiteren Verlauf des Durchflusses stellt sich die gewünschte Temperatur zuverlässig auf die vorgegebenen Sollwerte ein.

Hier will die Erfindung Abhilfe schaffen. Der Erfindung liegt die Aufgabe zugrunde, eine Mischvorrichtung der vorgenannten Art zu schaffen, bei der insbesondere auch zu Beginn eines Wasserdurchlaufs eine vorgegebene Temperatur des Wassermengenstroms gewährleistet ist. Gemäß der Erfindung wird diese Aufgabe durch die Merkmale des kennzeichnenden Teils des Patentanspruchs 1 gelöst.

Mit der Erfindung ist eine Mischvorrichtung der vorgenannten Art geschaffen, bei der insbesondere auch zu Beginn eines Wasserdurchlaufs eine vorgegebene Temperatur des Wassermengenstroms gewährleistet ist. Es hat sich gezeigt, dass eine Homogenisierung des den Temperatursensor umströmenden Mischwasserstroms eine zuverlässige Messung und damit auch eine zuverlässige Temperierung des Wassermengenstroms ermöglicht.

Dabei ist der Temperatursensor in der Spindel des Mehrwegeventils angeordnet. Hierdurch ist eine optimale Positionierung des Sensors in dem Wassermengenstrom innerhalb des Mengenventils erzielt.

Weiterhin sind die Mittel zur Homogenisierung des den Temperatursensor umströmenden Mischwasserstroms durch die Steuerscheibe des Mengenventils gebildet, die derart ausgebildet ist, dass sie genau eine Einströmöffnung aufweist. Hierdurch ist eine Gegenstrombildung verhindert, welche durch gleichzeitiges Einlaufen von Mischwasser durch die gegenüberliegend angeordneten Fenster des Kopfstücks entstehen kann. Hierdurch ist die Bildung von Lufteinschlüssen vermieden, wodurch eine zuverlässige Temperaturmessung gewährleistet ist.

Die Steuerscheibe ist als kreisrunde Scheibe ausgebildet, auf der ein kreisbogenförmiger Steg angeformt ist, der einen inneren Raum um wenigstens 250°, bevorzugt um 270° umschließt, wodurch eine kreisbogenförmige Einlassöffnung gebildet ist. Hierdurch ist ein einseitiger Mischwasserzustrom gewährleitstet. Durch die wenigstens 110° große, kreisbogenförmige Einlassöffnung wird auch ein Zufluss von Teilen beider Fenster ermöglicht. Hierdurch ist ein Rotationsradius der Spindel von 180° ermöglicht, wodurch eine Ausbildung des Mehrwegeventils derart ermöglicht ist, dass über die Spindel sowohl die Zuordnung des zu versorgenden Ablaufs als auch die Durchflussmenge des Wassermengenstroms einstellbar ist.

In Weiterbildung der Erfindung umfassen die Mittel zur Homogenisierung des den Temperatursensor umströmenden Mischwasserstroms eine Verwirbeleinrichtung, die im Zustrom des Mengenventils angeordnet ist. Hierdurch werden die von dem Mischventil herströmenden Kalt- und Warmwasserströme vermengt, wodurch eine gute Homogenisierung bewirkt ist. Bevorzugt ist die Verwirbeleinrichtung durch eine Flügelradscheibe gebildet.

In Weiterbildung der Erfindung ist in die kreisrunde Scheibe der Einlassöffnung gegenüberliegend eine Auslassöffnung eingebracht. Hierdurch ist ein Austreten des Wassermengenstroms nach Passieren des Temperatursensors gewährleistet.

In weiterer Ausgestaltung der Erfindung ist in der Leitung ein Durchflusssensor zur Messung des Wassermengenstroms angeordnet, der mit der Steuer- und Regelvorrichtung verbunden ist, wobei über die Steuer- und Regelvorrichtung die Durchflussmenge des Wassermengenstroms einstellbar ist. Hierdurch ist eine komfortable Regelung von Wassermengenstrom und -temperatur ermöglicht.

In Weiterbildung der Erfindung weisen sowohl das Mischventil als auch das Mengenventil ein Kopfstück auf, das von einer in diesem radial geführten Spindel mittig durchsetzt ist und in das seitlich gegenüberliegend zwei Fenster eingebracht sind und das auf seiner der Spindel entgegengesetzten Seite eine Durchlassscheibe mit zwei Durchtrittsöffnungen aufnimmt, wobei die Durchflussrichtung des Wasserstromes in dem Mengenventil entgegensetzt der Durchflussrichtung im Mischventil ist. Hierdurch ist die parallele Anordnung von Zufluss- und Abflussleitungen ermöglicht. Weiterhin können hierdurch weitgehend identische Ventiloberteile zum Einsatz kommen, wodurch Fertigungs- und Lagerkosten reduziert sind.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die Ansicht einer Mischvorrichtung im Teilschnitt;
- Fig. 3: die Darstellung des ablaufseitigen Gehäuseteils der Mischvorrichtung aus Figur 1 in Schnittdarstellung;

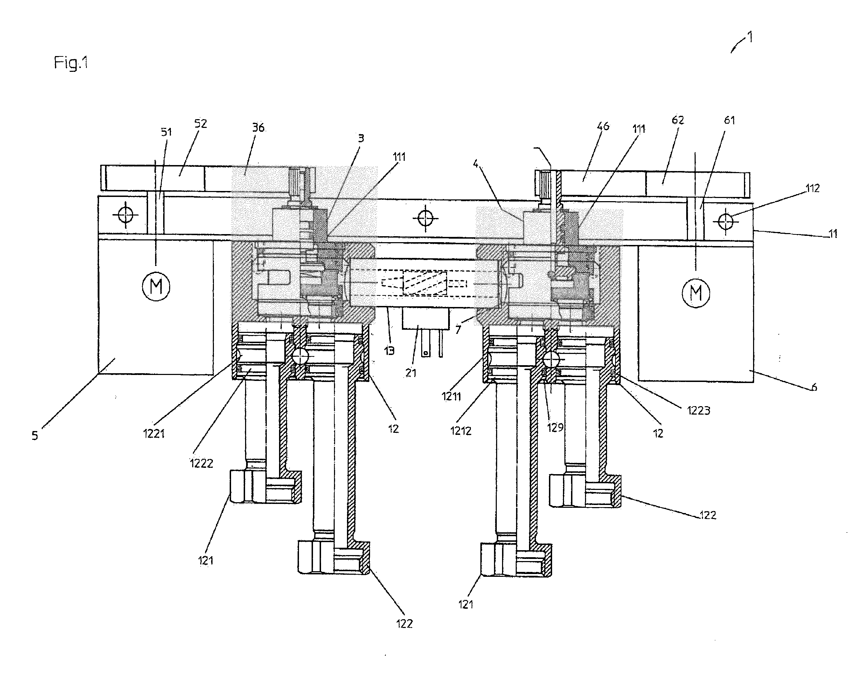

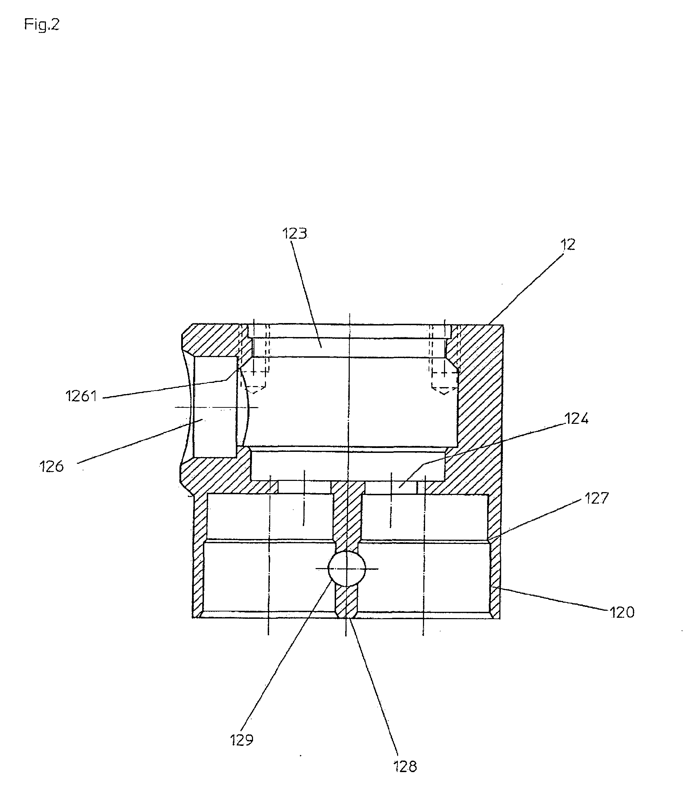

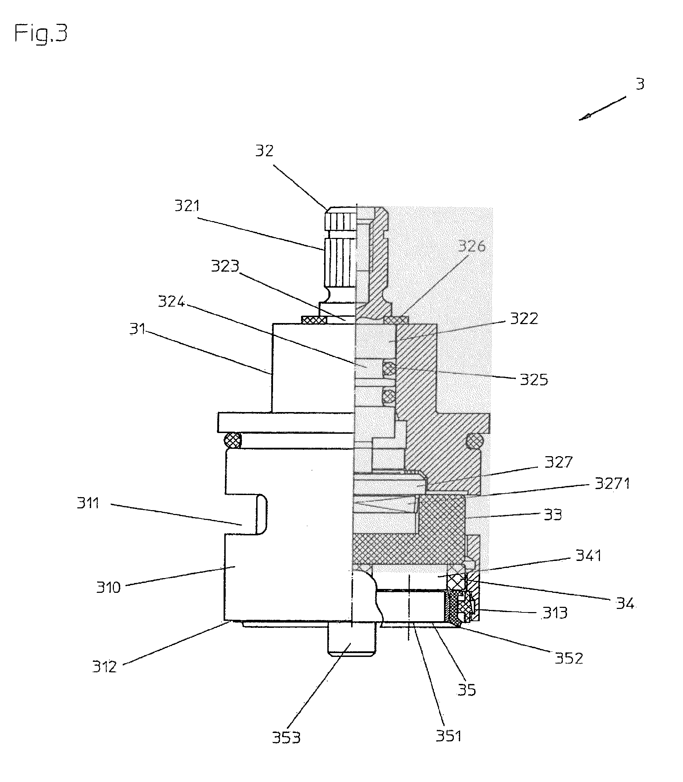

- Fig. 3: die Darstellung des Mischventiloberteils der Vorrichtung aus Figur 1 im Teilschnitt;

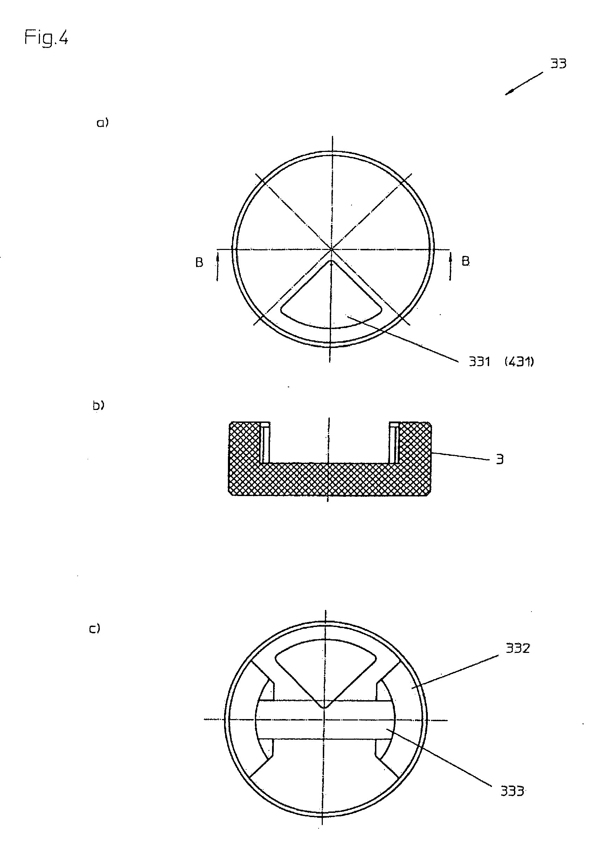

- Fig. 4: die Darstellung der Steuerscheibe des Mischventiloberteils aus Figur 3;
a) in der Ansicht von unten;
b) im Axialschnitt;
c) in der Draufsicht;

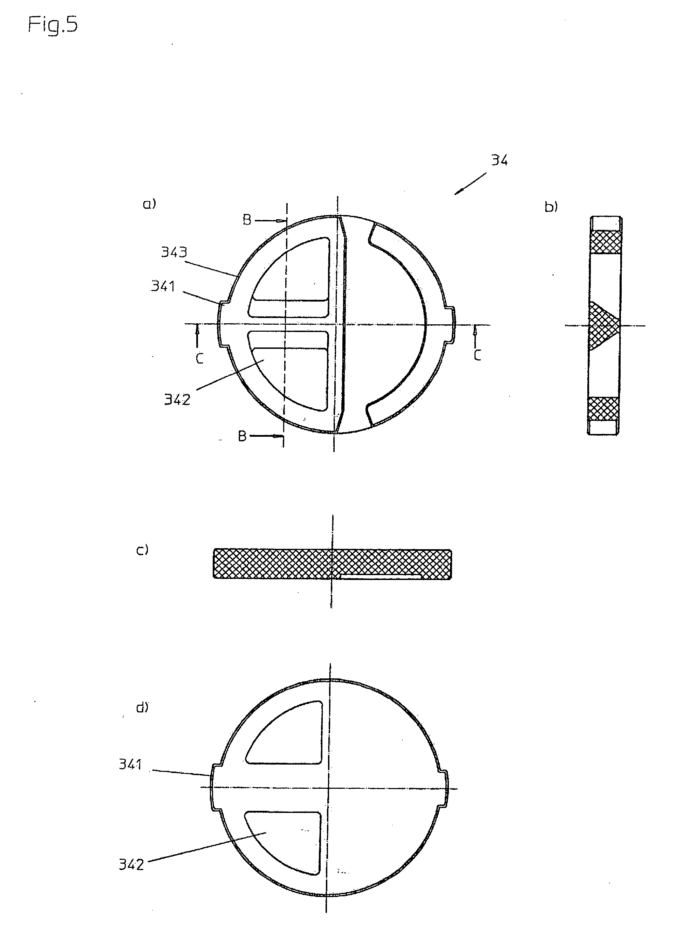

- Fig. 5: die Darstellung der Einlassscheibe des Mischventiloberteils aus Figur 3
a) in der Draufsicht;
b) in Schnittdarstellung entlang der Linie B-B in Figur a);
c) in Schnittdarstellung entlang der Linie C-C in Figur a);
d) in der Ansicht von unten;

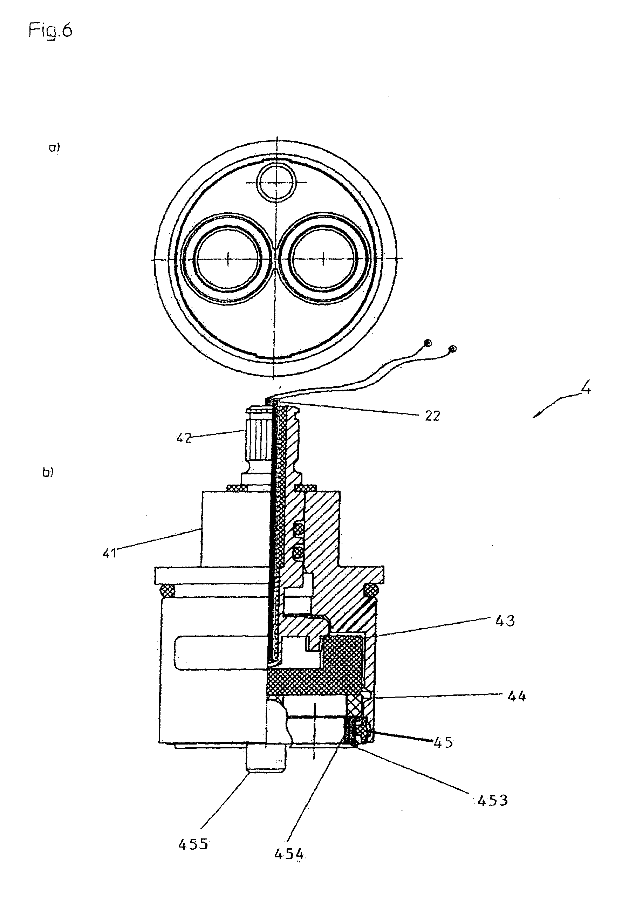

- Fig. 6: die Darstellung des Mehrwegeventiloberteils aus Figur 1
a) in der Ansicht von unten;
b) im Teilschnitt;

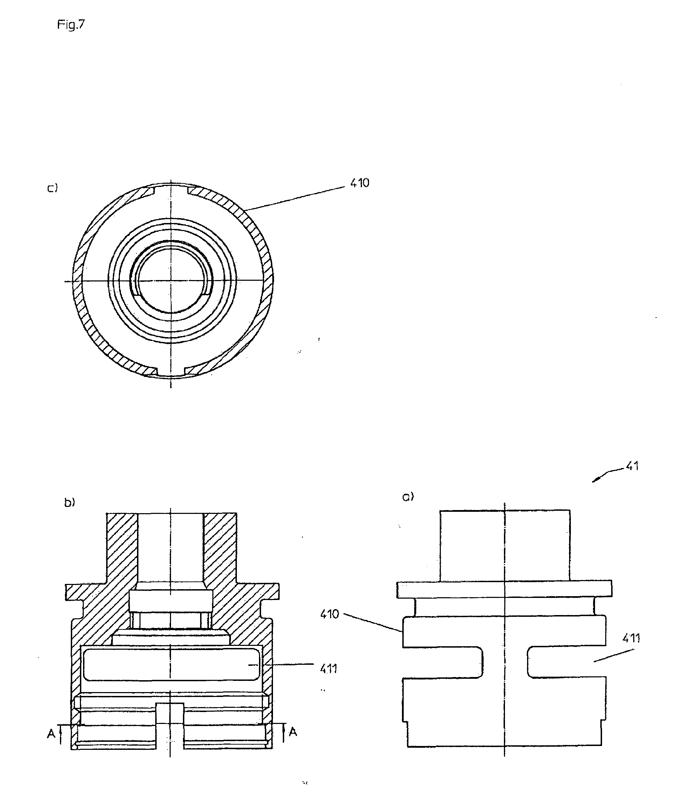

- Fig. 7: die Detaildarstellung des Kopfstücks des Mehrwegeventiloberteils aus Figur 6
a) in der Seitenansicht;
b) im Querschnitt;
c) im Schnitt A-A der Darstellung b);

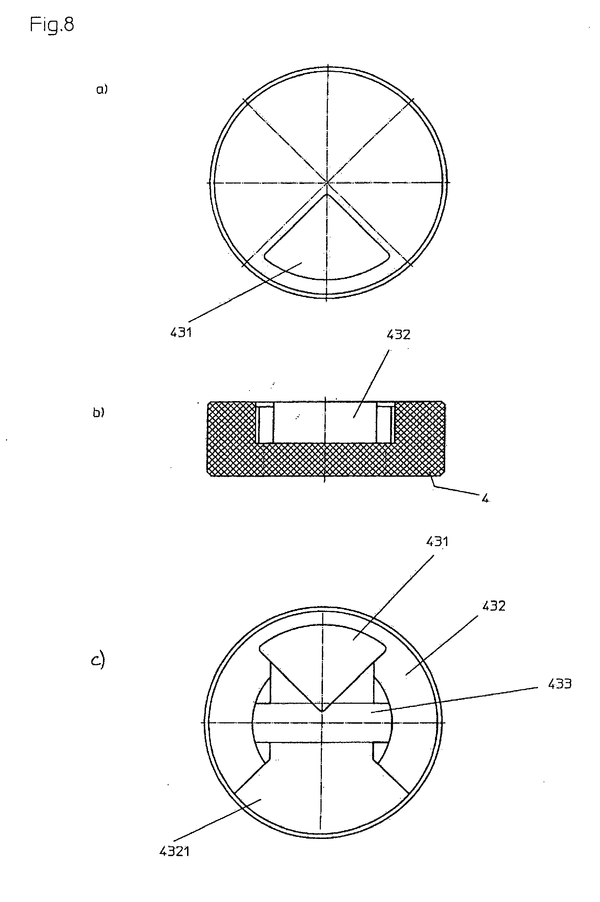

- Fig. 8: die Darstellung der Steuerscheibe des Mehrwegeventiloberteils aus Figur 6
a) in der Ansicht von unten;
b) im Axialschnitt;
c) in der Draufsicht;

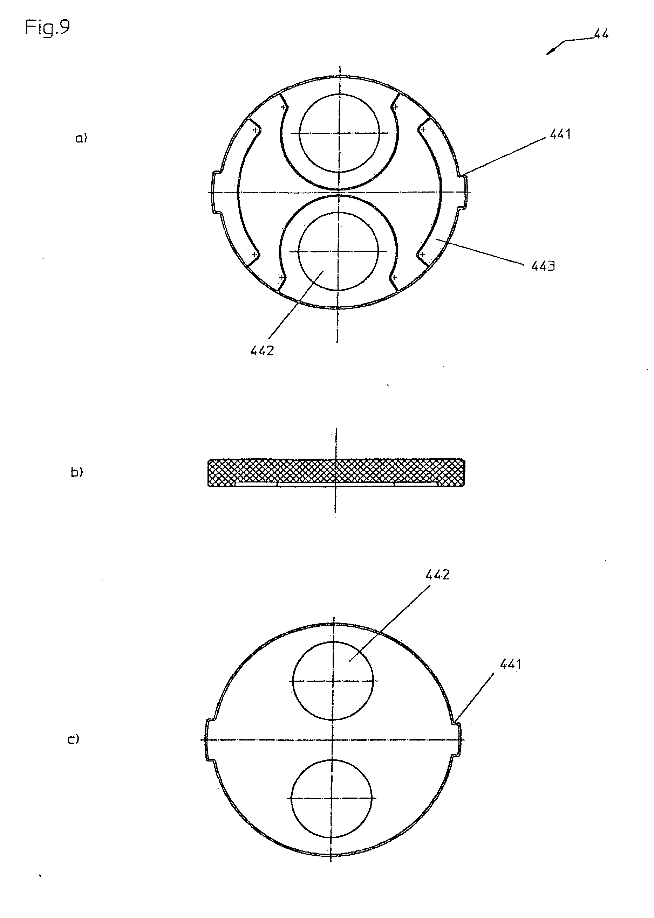

- Fig. 9: die Darstellung der Einlassscheibe des Mehrwegeventiloberteils aus Figur 6
a) in der Draufsicht;
b) im Querschnitt;
c) in der Ansicht von unten;

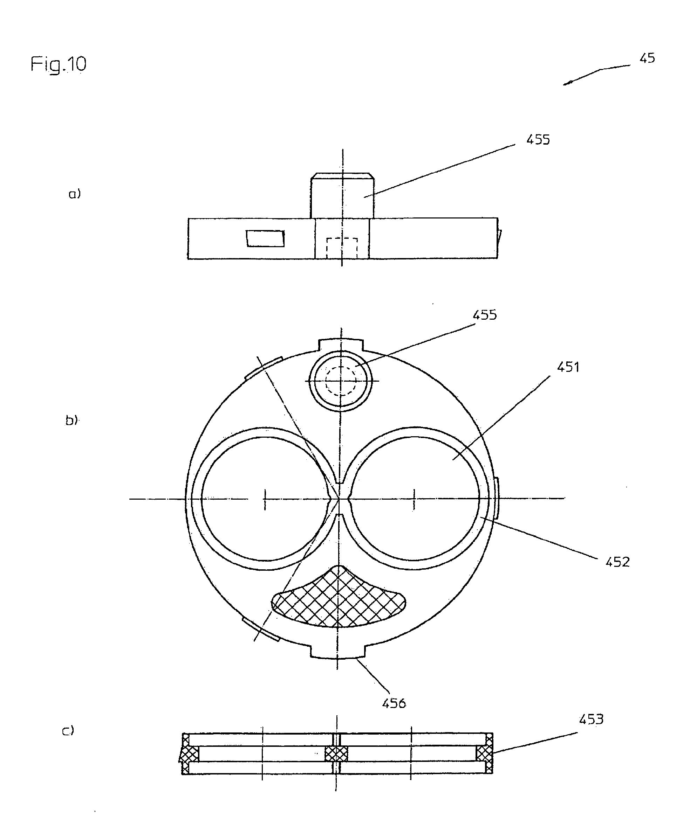

- Fig. 10: die Darstellung der Anschlussscheibe des Mehrwegeventiloberteils aus Figur 6
a) in der Seitenansicht;
b) in der Draufsicht;
c) im Querschnitt;

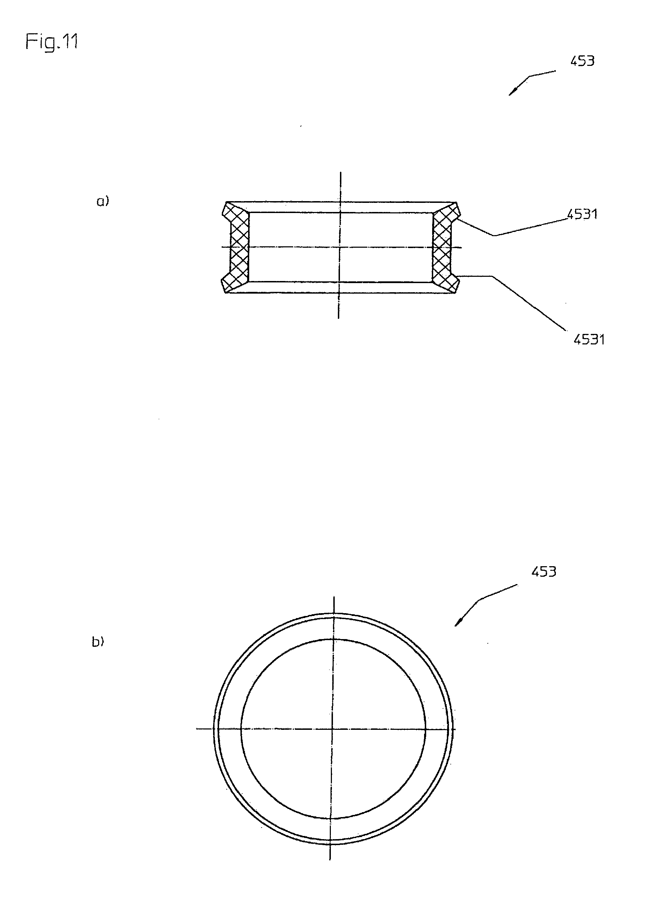

- Fig. 11: die Darstellung der Lippendichtung des Mehrwegeventiloberteils aus Figur 6
a) im Querschnitt;
b) in der Draufsicht;

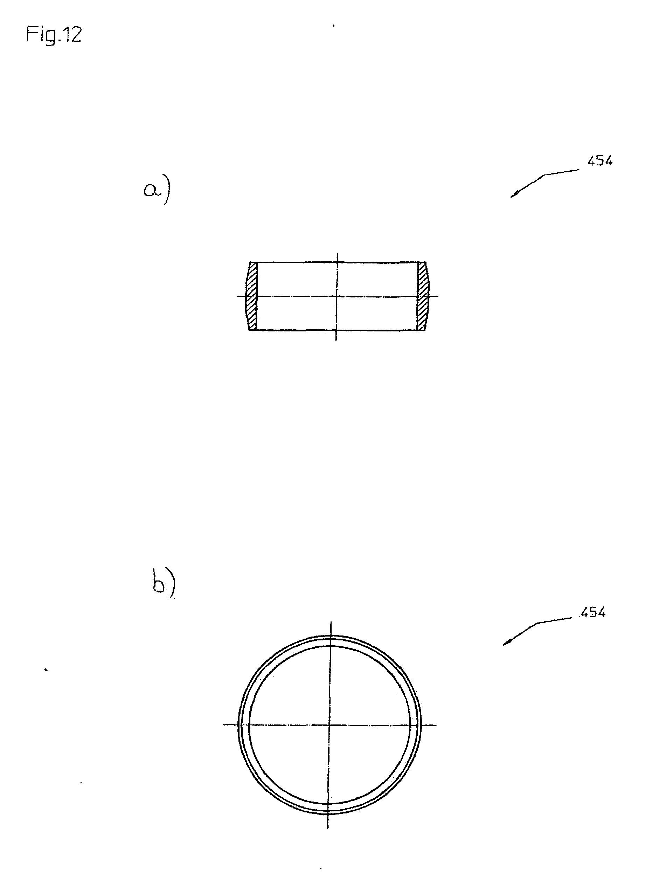

- Fig. 12: die Darstellung des Stützrings des Mehrwegeventiloberteils aus Figur 6
a) im Querschnitt;
b) in der Draufsicht und

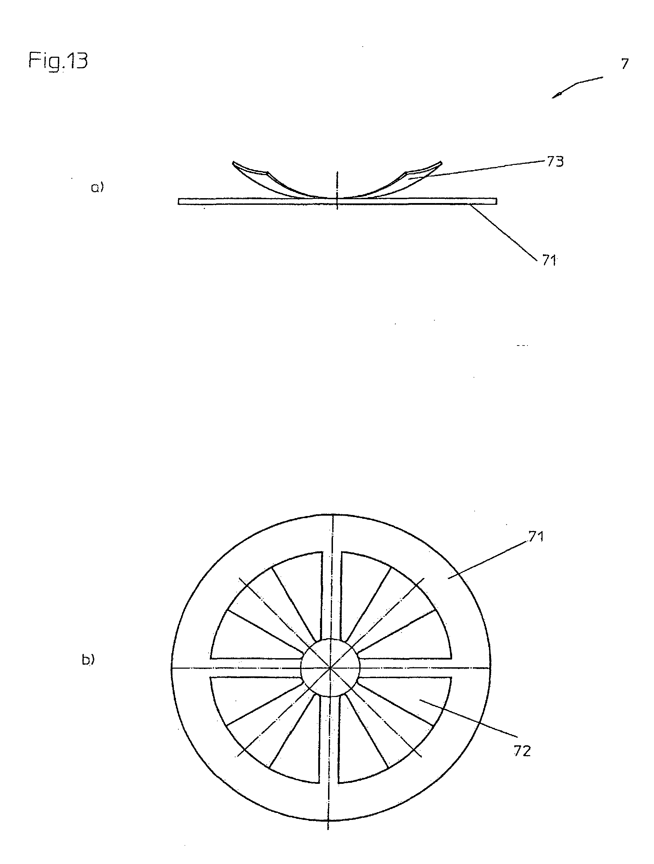

- Fig. 13: die Darstellung eines Flügelrades
a) in der Seitenansicht;
b) in der Draufsicht.

Die als Ausführungsbeispiel gewählte Mischvorrichtung 1 umfasst eine Schiene 11, an der nebeneinander zwei Gehäuseteile 12 angeordnet sind, welche über eine Leitung 13 miteinander verbunden sind, in der ein Durchflusssensor 21 angeordnet ist. Das eine, zulaufseitige Gehäuseteil 12 nimmt ein Mischventiloberteil 3 auf und ist mit zwei Anschlussstücken 121, 122 versehen. Das andere, ablaufseitige Gehäuseteil 12 nimmt ein Mehrwegeventiloberteil 4 auf und ist ebenfalls mit zwei Anschlussstücken 121, 122 versehen. Weiterhin sind zwei Elektromotoren 5, 6 zur Betätigung des Mischventiloberteils 3 bzw. des Mehrwegeventiloberteils 4 angeordnet.

Die Schiene 11 ist im Ausführungsbeispiel als rechteckiges Metallblech ausgebildet, welches an einer Längsseite rechtwinklig abgewinkelt ist. In der Schiene 11 sind Bohrungen zur Befestigung der beiden Gehäuseteile 12 eingebracht. Weiterhin sind zwei Ausnehmungen 111 zum Durchtritt eines Ventiloberteils 3, 4 eingebracht. Zu beiden Enden der Schiene 11 ist in diese jeweils ein Langloch zum Durchtritt der Welle eines Elektromotors 5, 6 eingebracht. Weiterhin sind im abgewinkelten Bereich der Schiene 11 Bohrungen 112 zur Befestigung der Vorrichtung 1 vorgesehen.

Die Gehäuseteile 12 sind identisch ausgebildet und im Ausführungsbeispiel als im Wesentlichen zylindrische Messinghohlkörper ausgebildet. An ihrer der Schiene 11 abgewandten Unterseite sind in das Gehäuse 12 zwei Bohrungen 120 zur Aufnahme der Anschlussstücke 121, 122 eingebracht. Die Bohrungen 120 sind tropfförmig ausgebildet und weisen auf etwa einem Drittel ihrer Länge eine Durchmesserverengung auf, durch die ein Absatz 127 gebildet ist. Die beiden Bohrungen 120 des Gehäuseteils 12 weisen eine gemeinsame Trennwand 128 auf, in welche die beiden Anschlussteile 121, 122 tangierend eine Führung 129 zur Aufnahme eines Sperrbolzens eingebracht ist. Die Führung 129 ist im Ausführungsbeispiel in Form einer hohlzylindrischen Bohrung ausgeführt, welche an ihrem äußeren Ende mit einem - nicht dargestellten - Innengewinde versehen ist. Durch die die Führung 129 bildende Bohrung ist die gemeinsame Trennwand 128 durchtrennt, sodass ein in die Führung 129 eingeführter Sperrbolzen in die beiden Bohrungen 120 hineinragt.

Seitlich ist in das Gehäuseteil 12 eine Bohrung 126 eingebracht, welche in der als Ventilsitz dienenden Bohrung 123 mündet. In der Bohrung 126 ist ein Absatz 1261 angeformt, der als Anschlag für die Leitung 13 dient.

Die Anschlussstücke 121, 122 sind in Art eines Rohrstücks ausgebildet und dienen dem Anschluss von Zulauf- bzw. Ablaufleitungen an den Gehäuseteilen 12. Das Anschlussstück 121 ist als kurzes Anschlussstück ausgebildet und weist endseitig umlaufend eine Sperrnut 1211 mit einem kreisbogenförmigen Querschnitt auf. Der Durchmesser des kreisbogenförmigen Querschnitts der Sperrnut 1211 entspricht dabei im Wesentlichen dem Außendurchmesser eines in die Führung 129 eingebrachten Sperrbolzens. Beidseitig der Sperrnut 1211 sind in dem Anschlussstück 121 umlaufend weiterhin zwei Nuten 1212 zur Aufnahme eines O-Rings 1213 eingebracht.

Das gegenüber dem Anschlussstück 121 länger ausgebildete Anschlussstück 122 weist ebenfalls eine Sperrnut 1221 auf, beidseitig derer außen umlaufend zwei Nuten 1222 zur Aufnahme eines O-Rings 1223 eingebracht sind.

Das als Ausführungsbeispiel gewählte Mischventiloberteil 3 weist ein Kopfstück 31 auf, das von einer in ihm radial geführten Spindel 32 mittig durchsetzt ist. Mit der Spindel 32 ist eine Steuerscheibe 33 formschlüssig verbunden und im Kopfstück 31 radial geführt. An dem der Spindel 32 abgewandten Seite der Steuerscheibe 33 ist eine Einlassscheibe 34 in dem Kopfstück 31 vorgesehen, an die sich eine Anschlussscheibe 35 anschließt, die mit dem durch die Bohrung 123 gebildeten Ventilsitz des Gehäuseteils 12 zur Anlage kommt.

Das Kopfstück 31 besteht aus einem symmetrischen Hohlkörper, dessen beiden Stirnflächen offen sind. Auf seiner dem Gehäuseteil 12 zugewandten Seite weist das Kopfstück 31 einen hülsenartigen Teil 310 auf. In dem Teil 310 sind zwei Durchtrittsfenster 311 vorgesehen.

Nach dem Einbringen in das Gehäuseteil 12 liegt ein Bund 312 des Kopfstücks 31 auf dem Grund der als Ventilsitz dienenden Bohrung 123 auf. In dem hülsenartigen Teil 310 ist innen im Bereich des Bundes 312 eine Hinterdrehung 313 angeordnet.

Die Spindel 32 ist im Wesentlichen massiv ausgeführt. Sie ist an ihrer dem Kopfstück 31 abgewandten Stirnseite außen als Außenvielkant 321 ausgeführt. Anschließend ist außen an der Spindel 32 eine Zylinderfläche 322 vorgesehen, mit der die Spindel 32 in dem Kopfstück 31 radial geführt ist. Zwischen der Zylinderfläche 322 und dem Außenvielkant 321 ist ein Einstich 323 vorgesehen, in den eine Wellensicherung 326 in Form eines Sprengrings federnd eingelegt ist. Die Wellensicherung 326 verhindert das Eindringen der Spindel 32 in das Kopfstück 31 über das vorgesehene Maß hinaus. Weiterhin sind in der Zylinderfläche 322 zwei Ringnuten 324 eingebracht, die O-Ringe 325 aufnehmen. Auf der dem Außenvielkant 321 entgegengesetzten Seite der Spindel 32 ist eine Scheibe 327 angeformt, die auf ihrer dem Gehäuseteil 12 zugewandten Seite einen Mitnehmer 3271 aufweist.

Die Steuerscheibe 33 ist im Wesentlichen als kreisrunde Scheibe ausgebildet, aus der ein Kreisausschnitt 331 ausgenommen ist. Der Kreisausschnitt 331 weist im Ausführungsbeispiel einen Winkel von ca. 90° auf. Auf ihrer der Spindel 32 zugewandten Seite weist die Steuerscheibe 3 zwei diametral zueinander angeordnete bogenförmige Absätze 332 auf. Der ringförmige Absatz 332 umfasst in montiertem Zustand den Mitnehmer 3271 der Spindel 32. An den Absätzen 332 sind Ausnehmungen 333 ausgebildet, in die der Mitnehmer 3271 fasst (vgl. Figur 4 c)).

Die Einlassscheibe ist in Figur 5 dargestellt. Sie weist auf ihrem Umfang zwei sich diametral gegenüberliegende Nasen 341 auf. Mit den Nasen 341 fasst die Scheibe 34 in Ausnehmungen, die hierzu in dem hülsenförmigen Teil 310 des Kopfstücks 31 vorgesehen sind. Die Einlassscheibe 34 ist damit drehfest in dem Kopfstück 31 angeordnet. Die Einlassscheibe 34 weist zwei nebeneinander angeordnete Kreisausschnitte 342 auf, die mit dem Kreisausschnitt 331 der Steuerscheibe 33 korrespondieren. Außen sind umlaufend der Kreisausschnitte 342 sowie im Bereich der Nasen 341 auf der der Steuerscheibe 33 abgewandten Unterseite der Einlassscheibe 34 stegartige Konturen 343 angeformt.

Die Anschlussscheibe 35 ist im Ausführungsbeispiel aus Kunststoff hergestellt. Sie weist auf ihrem Umfang ebenfalls zwei sich diametral gegenüberliegende Nasen auf, mit denen sie in Ausnehmungen, die hierzu in dem hülsenförmigen Teil 310 des Kopfstücks 31 vorgesehen sind, eingreift. Sie ist damit drehfest in dem Kopfstück 31 angeordnet. Die Anschlussscheibe 35 weist zwei nebeneinander angeordnete Durchtrittsöffnungen 351 auf, welche mit den beiden Kreisausschnitten 342 der Einlassscheibe 34 in Überdeckung positionierbar sind und in denen jeweils eine Lippendichtung 352 zur Abdichtung gegenüber dem durch die Bohrung 123 gebildeten Ventilsitz des Gehäuseteils 12 angeordnet ist. Weiterhin weist die Anschlussscheibe 35 auf ihrer der Einlassscheibe 34 abgewandten Unterseite einen zylinderförmigen Stift 353 auf, der mit einer in dem Gehäuseteil 12 angeordneten Sackbohrung korrespondiert und der Positionierung des Mischventiloberteils 3 in dem Gehäuseteil 12 dient.

Das Mehrwegeventiloberteil 4 ist weitgehend identisch zu dem Mischventiloberteil 3 aufgebaut. Es weist ein identisches Kopfstück 41 auf, das von einer in ihm radial geführten Spindel 42 mittig durchsetzt ist. In der Spindel 42 ist zusätzlich ein thermischer Sensor 22 zur kontinuierlichen Messung der Temperatur des von dem Mischventiloberteil 3 zugeleiteten Wassers angeordnet (vgl. Figur 6). Mit der Spindel 42 ist ebenfalls eine, wenn auch abweichend ausgebildete Steuerscheibe 43 formschlüssig verbunden und im Kopfstück 41 radial geführt. Gleichfalls ist eine Einlassscheibe 44 in dem Kopfstück 41 vorgesehen, an die sich eine Anschlussscheibe 45 anschließt, die mit dem durch die Bohrung 123 gebildeten Ventilsitz des Gehäuseteils 12 zur Anlage kommt. Das Mehrwegeventil 4 unterscheidet sich vom Mischventil 3 durch die unterschiedlichen zum Einsatz kommende Steuerscheibe 43, Einlassscheibe 44 und Anschlussscheibe 45.

Die Steuerscheibe 43 ist im Wesentlichen als kreisrunde Scheibe ausgebildet, aus der ein Kreisausschnitt 431 ausgenommen ist Der Kreisausschnitt 431 weist im Ausführungsbeispiel einen Winkel von ca. 90° auf. Auf ihrer der Spindel 42 zugewandten Seite weist die Steuerscheibe 43 im Gegensatz zur Steuerscheibe 33 des Mischventiloberteils 3 einen kreisbogenförmigen Steg 432 auf, der einen inneren Raum um 270° umschließt Hierdurch ist eine kreisbogenförmige Einlassöffnung 4321 gebildet. Der kreisbogenförmige Steg 432 umfasst in montiertem Zustand den Mitnehmer 3271 der Spindel 42. An dem Steg 432 sind gegenüberliegend Ausnehmungen 433 ausgebildet, in die der Mitnehmer 3271 fasst (vgl. Fig. 8c)). Die Einlassöffnung 4321 ist gegenüberliegend dem Kreisausschnitt 431 angeordnet.

Die Einlassscheibe 44 des Mehrwegeventiloberteils 4 ist in Figur 9 dargestellt. Sie weist im Gegensatz zur Einlassscheibe 34 des Mischventiloberteils 3 zwei kreisrunde, diametral zueinander angeordnete Durchtrittsöffnungen 442 auf. Außen sind umlaufend der Durchtrittsöffnungen 442 sowie im Bereich der seitlich angeformten Nasen 441 auf der der Anschlussscheibe 45 zugewandten Unterseite der Einlassscheibe 44 stegartige Konturen 443 angeformt.

Die Anschlussscheibe 45 weist im Gegensatz zur Anschlussscheibe 35 des Mischventiloberteils 3 zwei kreisrunde, diametral zueinander angeordnete Durchtrittsöffnungen 451 auf, welche mit den Durchtrittsöffnungen 442 der Einlassscheibe 44 fluchten. In den Durchtrittsöffnungen 451 ist innen umlaufend ein Steg 452 zur Aufnahme einer Lippendichtung 453 angeformt. Die Lippendichtung 453 ist über einen eingebrachten Stützring 454 in der Durchtrittsöffnung 451 gehalten. In montierten Zustand liegen die Lippen 4531 der Lippendichtung 453 dichtend gegen die Einlassscheibe 44 sowie gegen den Grund der als Ventilsitz dienenden Bohrung 123 des Gehäuseteils 12 an. Weiterhin weist die Anschlussscheibe 45 auf ihrer der Einlassscheibe 44 abgewandten Unterseite einen zylinderförmigen Stift 455 auf, der mit einer in dem Gehäuseteil 12 eingebrachten Sackbohrung korrespondiert und der Positionierung des Mehrwegeventiloberteils 4 in dem Gehäuseteil 12 dient.

Die Gehäuseteile 12 sind mittels - nicht dargestellter - Schrauben, an der Schiene 11 befestigt, derart, dass das in dem jeweiligen Gehäuseteil 12 eingebrachte Ventiloberteil 3, 4 mit seinem Kopfstück 31, 41 durch die Ausnehmung 111 der Schiene 11 hindurchragt. Die Gehäuseteile 12 sind über die Leitung 13, welche mit jeweils einem Ende an dem Absatz 1261 eines Gehäuseteils 12 anliegt, miteinander verbunden. Innerhalb der Leitung 13 ist dem Mehrwegeventiloberteil 4 vorgelagert ein Flügelrad 7 angeordnet. Das Flügelrad 7 besteht im Wesentlichen aus einem kreisscheibenförmigen Grundkörper 71, in den radial gleichmäßig beabstandet zueinander vier viertelkreisförmige Ausnehmungen 72 eingebracht sind. Die Ausnehmungen 72 mittig überdeckend sind dem Grundkörper 71 propellerartig Flügel 73 angeformt (vgl. Fig. 13). Das so ausgebildete Flügelrad 7 ist derart in der Leitung 13 positioniert, dass es bei Durchströmung mit Wasser in Richtung des Mehrwegeventiloberteils 4 in Rotation versetzt wird, wodurch eine Durchmischung des Wassermengenstroms bewirkt ist.

An ihrer der Leitung 13 gegenüberliegenden Seite ist an jedem Gehäuseteil 12 jeweils ein Elektromotor 5, 6 angeordnet, der mittels - nicht dargestellter - Schrauben, welche durch Langlöcher der Schiene 11 geführt sind, mit der Schiene 11 verbunden ist, derart, dass die Motorwelle 51, 61 des jeweiligen Motors 5, 6 durch die Aussparung 111 der Schiene 11 hindurchragt. An der den Motoren 5, 6 gegenüberliegenden Seite der Schiene 11 sind die Wellen 51, 61 der Motoren 5, 6 mit einer Zahnscheibe 52, 62 verbunden, welche über einen Zähnriemen 36, 46 mit dem Außenvielkant der Spindel 32, 42 der Ventiloberteile 3, 4 verbunden ist. Eine Rotation der Welle 51, 61 eines Motors wird hierdurch auf eine Spindel 32,42 eines Ventiloberteils 3, 4 übertragen, welches hierdurch bedienbar ist. Eine - nicht dargestellte - Steuer- und Regeleinrichtung ist eingangsseitig mit dem Durchflusssensor 21 sowie dem Temperatursensor 22 verbunden. Weiterhin ist eingangsseitig eine - nicht dargestellte- Eingabeeinheit angeordnet, mittels der benutzerseitig Vorgaben hinsichtlich der Wassertemperatur, des Wassermengenstroms sowie des Wasserablaufs (Badewanne / Dusche) einstellbar sind. Ausgangsseitig ist die - nicht dargestellte - Steuer- und Regeleinrichtung elektronisch mit den Motoren 5, 6 verbunden.

Im montierten Zustand ist die Mischvorrichtung zulaufseitig über das Anschlussstück 121 mit einem Kaltwasserzulauf und über das Anschlussstück 122 mit einem Warmwasserzulauf verbunden. Das ablaufseitige Gehäuseteil ist über das Anschlussstück 121 mit einem Wasserhahn einer Badewanne und über das Anschlussstück 122 mit dem Zulauf eines Duschkopfes verbunden. Nach Eingabe der gewünschten Wassertemperatur, Wassermenge sowie des gewünschten Ablaufs, dass heißt die Auswahl zwischen Wasserhahn oder Duschkopf werden die Ventiloberteile 3, 4 über die Motoren 5, 6 derart eingestellt, dass die über die Sensoren 21, 22 übermittelten Messwerte mit den gewählten Vorgabedaten übereinstimmen. Dabei wird über das Mischventiloberteil 3 die gewünschte Wassertemperatur eingestellt, welche im Zulauf des Mehrwegeventiloberteils 4 über den Sensor 22 kontinuierlich gemessen wird. Hierbei wird der Sensor 22 mit den über das Flügelrad 7 verwirbelten und homogenisierten Wasserstrom umspült. Aufgrund der besonderen Ausgestaltung der Steuerscheibe 43 mit nur einer Einlassöffnung 4321 ist eine Gegenstrombildung vermieden. Über das Mehrwegeventiloberteil 4 erfolgt zum einen die Zuordnung des von dem Mischventiloberteil 3 bereitgestellten Wassermengenstroms zur Badewanne oder zur Dusche; zum anderen ist über das Mehrwegeventiloberteil 4 durch Einstellung der Überdeckung des Kreisausschnitts 431 der Steuerscheibe 43 mit der Durchtrittsöffnung 442 der Einlassscheibe 44 bzw. mit dieser korrespondierenden Durchtrittsöffnung 451 der Anschlussscheibe 45 eine Änderung des Wassermengenstroms ermöglicht. Der jeweils erzielte Wassermengenstrom wird über den Durchflusssensor 21 an dienicht dargestellte - Steuer- und Regeleihrichtung gemeldet, welche bei Abweichung zum eingestellten Vorgabewert eine Nachregelung des Mehrwegeventiloberteils 4 über den Motor 6 vornimmt. Gleichsam erfolgt eine Nachregelung des Mischventiloberteils 3 über den Motor 5 bei Abweichungen zwischen dem von dem Temperatursensor 22 gemessenen Realwert zum voreingestellten Temperatur-Sollwert.

## Patentansprüche

1. Mischvorrichtung für Leitungswasser, umfassend ein Mischventil (3) und ein Mengenventil (4), die über eine Leitung (13) miteinander verbunden hintereinander geschaltet angeordnet sind, wobei das Mengenventil (4) ein seitlich gegenüberliegend zwei Fenster (411) aufweisendes Kopfstück (41) aufweist, das von einer in diesem radial geführten Spindel (42) mittig durchsetzt ist, die mit einer Steuerscheibe (43) im Eingriff steht und wobei in dem Mengenventil (4) ein Temperatursensor (22) zur Ermittlung der Temperatur des über das Mischventil (3) zugeleiteten Wassermengenstroms angeordnet ist, der mit einer Steuer- und Regelvorrichtung verbunden ist, über welche die Temperatur des Wassermengenstroms einstellbar ist, wobei Mittel zur Homogenisierung des den Temperatursensor (22) umströmenden Mischwasserstromes angeordnet sind, **dadurch gekennzeichnet, dass** der Temperatursensor (22) in der Spindel (42) des Mengenventils (4) angeordnet ist, wobei die Mittel zur Homogenisierung des den Temperatursensor (22) umströmenden Mischwasserstromes durch die Steuerscheibe (43) des Mengenventils (4) gebildet sind, die derart ausgebildet ist, dass sie genau eine Einströmöffnung aufweist und wobei die Steuerscheibe (43) als kreisrunde Scheibe ausgebildet ist, auf der ein kreisbogenförmiger Steg (432) angeformt ist, der einen inneren Raum um wenigstens 250 Grad, bevorzugt um 270 Grad umschließt, wodurch eine kreisbogenförmige Einlassöffnung (4321) gebildet ist.

2. Mischvorrichtung nach Anspruch 1, **dadurch gekennzeichnet, dass** die Mittel zur Homogenisierung des den Temperatursensor (22) umströmenden Mischwasserstromes eine zusätzliche Verwirbeleinrichtung umfassen, der im Zustrom des Mengenventils (4) angeordnet ist.

3. Mischvorrichtung nach Anspruch 2, **dadurch gekennzeichnet, dass** die Verwirbeleinrichtung durch eine Flügelradscheibe (7) gebildet ist.

4. Mischvorrichtung nach Anspruch 3, **dadurch gekennzeichnet, dass** in die Steuerscheibe (43) der Einlassöffnung (4321) gegenüberliegend eine Auslassöffnung (431) eingebracht ist.

5. Mischvorrichtung nach einem der vorgenannten Ansprüche, **dadurch gekennzeichnet, dass** in der Leitung (13) ein Durchflusssensor (21) zur Messung des Wassermengenstroms angeordnet ist, der mit der Steuerund Regelvorrichtung verbunden ist, wobei über die Steuer- und Regelvorrichtung die Durchflussmenge des Wassermengenstroms einstellbar ist.

6. Mischvorrichtung nach einem der vorgenannten Ansprüche, **dadurch gekennzeichnet, dass** das Mehrwegeventil (4) derart ausgebildet ist, dass über die Spindel (42) sowohl die Zuordnung des zu versorgenden Ablaufs als auch die Durchflussmenge des Wassermengenstroms einstellbar ist.

7. Mischvorrichtung nach einem der vorgenannten Ansprüche, **dadurch gekennzeichnet, dass** sowohl das Mischventil (3) als auch das Mengenventil (4) ein Kopfstück (31, 41) aufweisen, das von einer in diesem radial geführten Spindel (32, 42) mittig durchsetzt ist, und in das seitlich wenigstens ein Fenster (311) eingebracht ist und das auf seiner der Spindel (32, 42) entgegengesetzten Seite eine Einlassscheibe (34, 44) mit zwei Durchtrittsöffnungen (351, 451) aufnimmt, wobei die Durchflussrichtung des Wassermengenstroms in dem Mengenventil (4) entgegengesetzt der Durchflussrichtung im Mischventil (3) ist.

## Claims

1. Mixing device for tap water comprising a mixing valve (3) and a flow control valve (4), which are connected in series via a pipe (13), wherein the flow control valve (4) has a headpiece (41) with two laterally opposite windows (411), which is centrally penetrated by a spindle (42) being radially guided in it, which is in mesh with a control disc (43) and wherein a temperature sensor (22) for determining the temperature of the water flow fed via the mixing valve (3) is arranged in the flow control valve (4), which is connected to a controlling and regulating device, via which the temperature of the water flow is adjustable, wherein means for homogenization of the mixed water flow circulating around the temperature sensor (22) are arranged, **characterised in that** the temperature sensor (22) is arranged in the spindle (42) of the mixing valve (4), wherein the means for homogenization of the mixed water flow circulating around the temperature sensor (22) are formed by the control disc (43) of the flow control valve (4), which is designed in a way that it has exactly one inlet and wherein the control disc (43) is designed as a circular disc, onto which an arc-shaped web (432) is mounted, which encloses an inner space by at least 250 degrees, preferably by 270 degrees, whereby an arc-shaped inlet (4321) is formed.

2. Mixing device according to claim 1, **characterised in that** the means for homogenization of the mixed water flow circulating around the temperature sensor (22) comprise an additional swirling device arranged in the inflow of the flow control valve (4).

3. Mixing device according to claim 2, **characterised in that** the swirling device is formed by an impeller disc (7).

4. Mixing device according to claim 3, **characterised in that** an outlet (431) is inserted in the control disc (43) opposite the inlet (4321).

5. Mixing device according to one of the previous claims, **characterised in that** in the pipe (13) a flow sensor (21) for measuring the water flow is arranged, which is connected to the controlling and regulating device, wherein the flow rates of the water flow are adjustable via the controlling and regulating device.

6. Mixing device according to one of the previous claims, **characterised in that** the manifold valve (4) is designed in a way that the allocation of the flow to be supplied as well as the flow rates of the water flow are adjustable via the spindle (42).

7. Mixing device according to one of the previous claims, **characterised in that** the mixing valve (3) as well as the flow control valve (4) have a headpiece (31, 41), which is centrally penetrated by a spindle (32, 42) radially guided in it, and into which at least one window (311) is inserted laterally and which receives an inlet disc (34, 44) with two openings (351, 451) at its side opposite the spindle (32, 42), wherein the flow direction of the water flow in the flow control valve (4) is opposite to the flow direction in the mixing valve (3).

## Revendications

1. Dispositif mélangeur pour de l'eau du robinet, comprenant une vanne mitigeuse (3) et une vanne de débit (4) reliées entre elles en série par une conduite (13), sachant que la vanne de débit (4) comporte une partie têtière (41) présentant deux fenêtres (411) latérales se faisant face, partie têtière qui est traversée par une broche (42) guidée radialement dans le milieu de celle-ci, broche qui engrène dans un disque de commande (43) et sachant que dans la vanne de débit (4) est agencé un capteur de température (22) servant à déterminer la température du flux d'eau envoyé via la vanne mélangeuse (3), flux qui est relié avec un dispositif de commande et de régulation via lequel il est possible de régler la température du flux d'eau, sachant que sont agencés des moyens permettant d'homogénéiser le flux d'eau mitigée baignant le capteur de température (22) pendant son écoulement, **caractérisé en ce que** le capteur de température (22) est agencé dans la broche (42) de la vanne de débit (4), sachant que les moyens d'homogénéisation du flux d'eau mitigée baignant le capteur de température (22) pendant son écoulement sont formés par le disque de commande (43) de la vanne de débit (4), disque qui est configuré de sorte à présenter exactement un orifice d'afflux et sachant que le disque de commande (43) est configuré en disque de forme circulaire sur lequel a été formé une nervure (432) en arc de cercle qui entoure un espace intérieur sur au moins 250 degrés, de préférence sur 270 degrés, ce qui forme un orifice d'admission (4321) en forme d'arc de cercle.

2. Dispositif mitigeur selon la revendication 1, **caractérisé en ce que** les moyens d'homogénéisation du flux d'eau mitigée baignant le capteur thermométrique (22) pendant son écoulement comprennent en plus un dispositif générateur de turbulences agencé dans le flux arrivant à la vanne de débit (4).

3. Dispositif mitigeur selon la revendication 2, **caractérisé en ce que** le dispositif générateur de turbulences est formé par un disque à pales (7).

4. Dispositif mitigeur selon la revendication 3, **caractérisé en ce que** dans le disque de commande (43) un orifice de sortie (431) a été ménagé en face de l'orifice d'admission (4321).

5. Dispositif mitigeur selon l'une des revendications précédentes, **caractérisé en ce qu'**un capteur de débit (21) est agencé dans la conduite (13) afin de mesurer le flux d'eau, ce capteur étant relié au dispositif de commande et de régulation, sachant que le dispositif de commande et de régulation permet de régler le débit du flux d'eau.

6. Dispositif mitigeur selon l'une des revendications précédentes, **caractérisé en ce que** la vanne multivoies (4) est configurée de sorte que, via la broche (42), aussi bien l'attribution du bec d'écoulement à desservir que le débit du flux d'eau soient réglables.

7. Dispositif mitigeur selon l'une des revendications précédentes, **caractérisé en ce qu'**aussi bien la vanne mitigeuse (3) que la vanne de débit (4) présentent une partie têtière (31, 41) traversée radialement en son milieu par une broche (32, 42) et dans laquelle a été ménagée latéralement au moins une fenêtre (311), et qui sur son côté opposé à la broche (32, 42) reçoit un disque d'admission (34, 44) avec deux orifices de passage (351, 451), sachant que le sens d'écoulement du flux d'eau dans la vanne de débit (4) est opposé au sens d'écoulement dans la vanne mitigeuse (3).
